# EUROPEAN PATENT SPECIFICATION

(11) **EP 4 423 441 B1**
(45) Date of publication and mention of the grant of the patent: **29.04.2026**
(21) Application number: 22790558.5
(22) Date of filing: 26.10.2022
(51) Int. Cl.: F25B 13/00, F16K 11/074, F16K 27/04, F16K 37/00, F25B 41/26

(54) **FOUR-WAY VALVE FOR A HEAT-PUMP ARRANGEMENT**
VIERWEGEVENTIL FÜR EINE WÄRMEPUMPENANORDNUNG
VANNE À QUATRE VOIES POUR UN AGENCEMENT DE POMPE À CHALEUR

(30) Priority: 26.10.2021 EP 21204849
(43) Date of publication of application: 04.09.2024
(73) Proprietor: Danfoss A/S, 6430 Nordborg (DK)
(72) Inventor: VAN BEEK, Johan, 6430 Nordborg (DK)
(74) Representative: Patentanwälte Olbricht Buchhold Keulertz
(86) International application number: PCT/EP2022/080028
(87) International publication number: WO 2023/073077

(56) References cited:
- CN-A- 109 028 388
- JP-A- 2017 025 986
- JP-A- 2017 057 977
- JP-B2- 4 845 150
- US-A1- 2006 230 770
- US-A1- 2008 099 070

## Description

The present invention pertains to a four-way valve for a heat-pump arrangement. The valve comprises a housing with four fluid connection ports, a rotatable valve element for switching the connections between the fluid connection ports, an actuator for rotating the valve element and sensor components on a low pressure side and a high pressure side of the valve for measuring properties of the fluid inside the housing. The invention is also directed at a heat-pump arrangement comprising a corresponding four-way valve and a housing for a fluid application.

Four-way valves are known to be used with heat-pump arrangements. The valves provide means for operating the heat-pump arrangements in a bidirectional manner, i.e. as a cooling or a heating device. The heat-pump arrangements may require a number of different sensors and actuators. Document US 2006/230770 A1 discloses a four-way valve according to the preamble of claim 1.

A problem arising with the known valves is that the various components of the heat-pump arrangement and the positioning of said components may complicate the assembly, maintenance and replacement of the heat-pump arrangement or said components.

The aim of the present invention is to overcome this problem by providing an improved four-way valve.

This aim is achieved by a four-way valve according to claim 1 Preferable embodiments of the invention are subject to the dependent claims.

According to claim 1, a four-way valve for a heat-pump arrangement is provided. The valve comprises a housing with four fluid connection ports. The fluid connection ports may be arranged in parallel to each other. A rotatable valve element is provided for switching the connections between the fluid connection ports. The connections ports may comprise two inlet and two outlet ports. In one position of the rotatable valve element, a first inlet may be connect to a first outlet port and a second inlet may be connect to a second outlet port. In another position of the rotatable valve element, the first inlet may be connect to the second outlet port and the second inlet may be connect to the first outlet port.

The valve element may be provided inside a central portion of the housing. An actuator is provided for rotating the valve element. The valve further comprises sensor components on a low pressure side and a high pressure side of the valve for measuring properties of the fluid inside the housing. The low and high pressure sides of the valve correspond to portions of the valve at which low and high pressure fluids, respectively, are present during operation of the valve.

The valve combines all or almost all peripheral devices, such as actuators and sensors, required for controlling the fluid flow across the valve during its operation. The valve may be provided in a ready to assemble state by the manufacturer, in which all or almost all of its peripheral devices are in place and ready to be connected or already connected with some control mean, such that the required in-situ assembly steps are minimized.

In a preferred embodiment of the invention, the housing is formed integrally and/or extruded and/or pressure die cast and/or made of aluminium or an aluminium alloy and/or the housing is provided with filling valves, in particular Schrader valves. Providing an integrally formed and, in particular, extruded housing reduces the manufacturing costs of the housing and therefore of the entire valve.

In another preferred embodiment of the invention, the housing comprises three partially separated portions, wherein a central portion comprises two central fluid connection ports and two lateral portions comprise one lateral fluid connection port each. The central portion may house the rotatable valve element. The two lateral portions may be at least partially symmetrical to each other. The two lateral portions may be positioned at opposite sides of the central portion.

In a particularly preferred embodiment of the invention, the lateral fluid connection ports are arranged opposite the sensor components, in particular in an axial direction of the valve. The valve may be designed such that fluid connection components such as the ports and/or conduits are arranged separated from and in particular opposite to electric components such as the sensors and/or actuators.

In another particularly preferred embodiment of the invention, the partially separated portions are separated by grooves, in particular milled or stamped grooves. The grooves may reduce undesired heat transfer between the partially separated portions, thereby increasing the thermal efficiency of the valve. The term grooves may be understood in a broad sense. The corresponding feature may be a recess, an indentation or any other geometrical feature capable of reducing the heat transfers between the partially separated portions. The groove may be machined or formed in any other convenient way.

In another preferred embodiment of the invention, the fluid connection ports are arranged at a side of the housing opposite the actuator. The actuator and at least some of the fluid connection ports may be arranged such that their central axes are parallel to each other and/or coplanar. Two central fluid connection ports may be arranged directly opposite the actuator, whereas two lateral fluid connection ports may be arranged further radially outward of the central axis of the actuator.

In another preferred embodiment of the invention, the sensor components are P&T transmitters and/or the filling valves are Schrader valves and/or the rotatable valve element is injection moulded and/or made of steel, aluminium, an aluminium alloy or a ceramic material and/or that the four-way valve further comprises an expansion component and/or a pressure switch. The P&T transmitters may be combined transmitters for measuring pressure and temperature.

In another preferred embodiment of the invention, at least one redundant seal is provided between the housing and at least one of a connector, the actuator, the sensor components and/or the filling valves. The seal may be a metal seal and/or it may comprise glue or other synthetic materials. The seal may comprise a knife edge seal portion. A redundant seal improves the longevity of the valve and reduces the risk of leakages at the ports and openings of the housing of the valve.

In another preferred embodiment of the invention, the housing comprises tapped blind holes for connecting conduits to the fluid connection ports. The housing may be therefore adapted for not only providing access to its inside for sensors and actuators, but also for attaching conduits in a cost-efficient and durable manner.

In another preferred embodiment of the invention, at least one fluid connector is provided forming a fluid connection between at least one of the fluid connection ports and the heat-pump arrangement, wherein the fluid connector is rotatable with respect to the remainder of the housing and wherein the fluid connector comprises at least one connector port for fluidly connecting the fluid connector to at least one of the sensor components. The fluid connector may be rotatable with respect to the remainder of the housing in the sense that the fluid connector may be rotated at any given angle with respect to the remainder of the housing prior to being rigidly fixed to the remainder of the housing by means of e.g. a union nut.

In a particularly preferred embodiment of the invention, four fluid connectors are provided forming a fluid connection between each of the fluid connection ports and the heat-pump arrangement, wherein at least one of the fluid connectors comprises the connector port for fluidly connecting the fluid connector to at least one of the sensor components. The fluid port of the fluid connector provides an easy and adjustable communication path to the inside of the housing. The fluid connectors may be regarded as part of the housing, especially as the fluid conditions within the fluid connectors are similar or identical to the fluid conditions in the remainder of the housing.

In another preferred embodiment of the invention, the fluid connector comprises between two and six connector ports. The outside of the fluid connector may be formed in a hexagonal shape. The faces of the hexagonal shape may comprise one connector port each, such that up to six connector ports may be provided on the distinct faces of the hexagonal shape.

In another preferred embodiment of the invention, the fluid connector is connected to the remainder of the housing via a union nut, wherein preferably the union nut is screwed to the remainder of the housing. The housing may comprise a union nut interface, threaded for receiving the union nut. The union nut interface may be formed integrally with the housing or it may be a separate component from the housing which might be e.g. welded to the housing.

In another preferred embodiment of the invention, a deformed gasket is provided between the fluid connector and the remainder of the housing, wherein preferably the gasket is a metal component and/or the gasket is deformed by an end-portion of the fluid connector pressing against a contact portion of the remainder of the housing. The gasket may be made of a soft metal, such as copper or aluminium, preferably high grade aluminium.

In another preferred embodiment of the invention, the end-portion of the fluid connector and the contact portion of the remainder of the housing comprise a protruding portion and a recessed portion, preferably a chamfered portion. The protruding portion and the recessed portion may be shaped for providing a desired deformation shape of the gasket, maximising the sealing and/or fit of the gasket.

In another preferred embodiment of the invention, a seal is provided between the union nut and the gasket. The seal may seal the gasket against the surrounding atmosphere of the valve, such that no moisture contained in the atmosphere may affect the gasket.

In another preferred embodiment of the invention, two first fluid connection ports are oriented at an angle between 45° and 90° to two second fluid connection ports, wherein preferably the two first fluid connection ports are aligned coaxially to each other and/or the two second fluid connection ports are aligned parallel to each other. The valve is typically positioned within a broader system, such as the mentioned heat-pump arrangement. The specific orientation of the fluid connection ports with respect to each other may facilitate the positioning of the valve within the broader system.

In another preferred embodiment of the invention, the second fluid connection ports are arranged between the actuator and the two first fluid connection ports. The actuator may therefore be provided at an extreme end of the valve, while the first fluid connection ports are provided at an opposite extreme end of the valve.

In another preferred embodiment of the invention, the quick connector is fluidly connected to a filling valve, in particular a Schrader valve, via its connector port and/or the flujd connector is fluidly connected to a fluid conduit via its connector port. The fluid connector may hence be used for providing a communication path between the inside of the fluid connector and therefore the inside of the housing on one side and the outside of the valve on the other side.

The invention is also directed at a heat-pump arrangement comprising a corresponding four-way valve and a compressor. The four-way valve and the compressor are connected such that a fluid conduit portion closest to the actuator is fluidly connected to the suction port of the compressor, in particular in all positions of the rotatable valve element.

The invention is furthermore directed at a for a fluid application, comprising at least one connection port and at least one connector connectable to the at least one fluid connection port, characterized in that a deformed gasket is provided between the fluid connector and the remainder of the housing, wherein the gasket is deformed by an end-portion of the fluid connector pressing against a contact portion of the remainder of the housing, wherein the fluid connector comprises at least one connector port for fluidly connecting the fluid connector to at least one external device, and wherein a union nut is screwed to the remainder of the housing for pressing against the fluid connector.

Further details and advantages of the invention are described with reference to the figures. The figures show:
- Figure 1:: a perspective view of one side of the four-way valve;
- Figure 2:: a perspective view of an opposite side of the four-way valve;
- Figure 3:: a section view of the four-way valve;
- Figure 4:: a side view of the four-way valve with an expansion component;
- Figs. 5a-5c:: different views of the seals of the four-way valve;
- Fig. 6:: a perspective view of another embodiment of the four-way valve;
- Figs. 7a-7b:: side views of the other embodiment of the four-way valve;
- Fig. 8:: a section view of the other embodiment of the four-way valve;
- Fig. 9:: another section view of the other embodiment of the four-way valve;
- Fig. 10:: a detailed section view of the other embodiment of the four-way valve;
- Fig. 11:: a detailed section view of the gasket in a first state; and
- Fig. 12:: a detailed section view of the gasket in a second state.

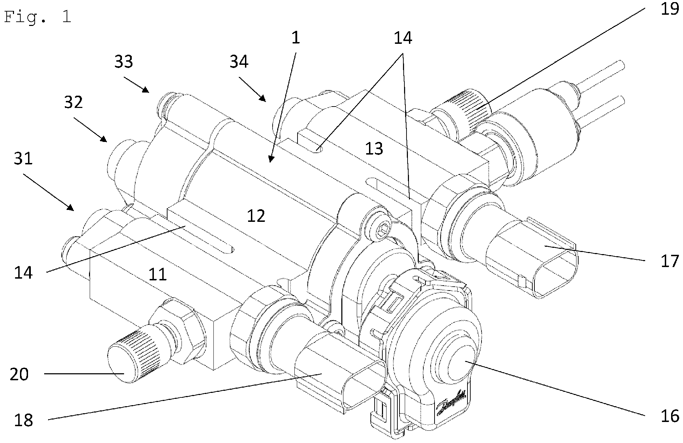

Figure 1 is a perspective view of one side of an embodiment of the presently described four-way valve. The four-way valve is provided for a heat-pump arrangement, such that it controls a heat exchanger fluid flow between a compressor and a heat exchanger. The valve comprises a housing 1 with four fluid connection ports 31, 32, 33, 34. The fluid connection ports 31, 32, 33, 34 are only indicated by the reference numbers and the corresponding arrows, they are not visible in figure 1.

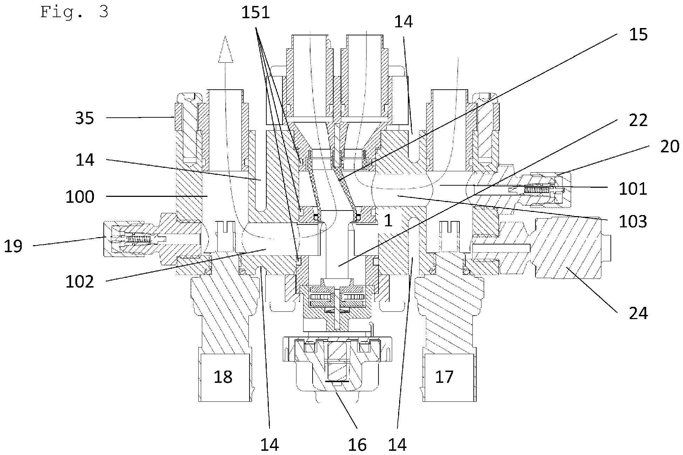

A rotatable valve element 15, which is shown in figure 3, for switching the connections between the fluid connection ports 31, 32, 33, 34 is provided inside the housing 1. An actuator 16 for rotating the valve element 15 is provided at one of the axial ends of said valve element 15. Sensor components 17, 18 on a low pressure side and a high pressure side of the valve are provided for measuring properties of the fluid inside the housing 1.

In an alternative embodiment, the four-way valve comprises a housing 1 with four fluid connection ports 31, 32, 33, 34, a rotatable valve element 15 for switching the connections between the fluid connection ports 31, 32, 33, 34, an actuator 16 for rotating the valve element 15 and sensor components 17, 18 for measuring properties of the fluid inside the housing 1. In this embodiment, the housing 1 is an extruded component.

At least one of the sensor components 17, 18 may be arranged in parallel or coaxially to at least some of the fluid connection ports 31, 32, 33, 34. Alternatively or additionally, at least one of the sensor components 17, 18 may be arranged at least partially in a feedthrough extending along an axial direction of the housing 1. The axial direction of the housing 1 may be parallel to the axial direction of at least one of the fluid connection ports 31, 32, 33, 34. The fluid connection ports 31, 32, 33, 34 may be arranged in parallel and next to each other. The fluid connection ports 31, 32, 33, 34 may be arranged next to each other in a direction, which is perpendicular to the axial direction of the housing 1.

In order to facilitate the manufacture of the housing 1, the housing 1 may be formed integrally. Possible manufacturing methods comprise extrusion and/or pressure die casting. The chosen manufacturing method makes it possible to produce conduits, openings and/or other features of the housing 1 simultaneously, thereby facilitating its manufacture.

Any suitable metal or metal alloy such as aluminium or an aluminium alloy may be used for manufacturing the housing 1. The housing may be provided with filling valves 19, 20, in particular Schrader valves for filling the heat pump arrangement with a working fluid or emptying the heat pump arrangement.

The housing 1 may comprise three partially separated portions 11, 12, 13, wherein a central portion 12 comprises two central fluid connection ports 32, 33 and two lateral portions 11, 13 comprise one lateral fluid connection port 31, 34 each.

The three partially separated portions 11, 12, 13 may be arranged co-planar with respect to each other and/or in a width direction of the housing 1, perpendicular to the axial direction of the housing 1. The expression "partially separated" may be understood in a broad sense and may refer to portions which are simply spaced apart from each other. They may be separated from each other in the sense that the distance between them reduces the thermal flux between the three portions.

Alternatively or additionally, the three partially separated portions 11, 12, 13 of the housing 1 extend over the same distance in the axial direction of the housing 1. Each of the three partially separated portions 11, 12, 13 may extend over the entire length of the housing 1 in the axial direction thereof. Thus, the housing 1 may be bound by two opposing faces, in particular parallel faces.

The central portion 12 of the three partially separated portions 11, 12, 13 may be larger than the two lateral portions 11, 13. The central portion 12 may comprise some cylindrical and/or convex sub-portions extending in an axial and a height direction of the housing 1. The central portion 12 may extend furthest in a height direction of the housing 1. The height direction may be perpendicular to both, the axial or length direction and the width direction.

In the embodiment of figure 1, the lateral fluid connection ports 31, 34 are arranged opposite the sensor components 17, 18. The lateral fluid connection ports 31, 34 may be arranged coaxially or, more broadly speaking, in parallel to the sensor components 17, 18. The sensor components 17, 18 may be at least partially inserted into fluid conduits 100, 101, shown in figure 3, within the housing 1 and leading to the fluid connection ports 31, 34. The sensor components 17, 18 may be P&T transmitters, which preferably may also be arranged in the axial direction of the housing 1.

The partially separated portions 11, 12, 13 may be separated by grooves 14, in particular milled or stamped grooves 14. There may be two grooves 14 between each neighbouring separated portion 11, 12, 13. Two opposing grooves 14 may, in total, extend over more than half of the axial length of the housing 1. The grooves 14 may extend in the axial direction of the housing 1.

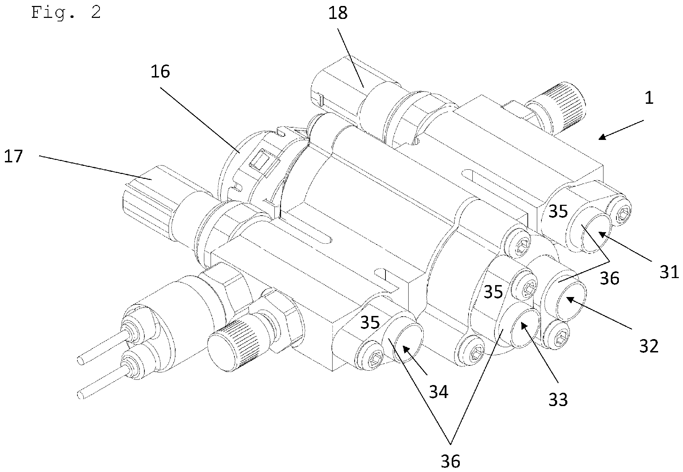

Figure 2 is a perspective view of an opposite side of the four-way valve. The actuator 16 is shown on the left side of the housing 1 and the fluid connection ports 31, 32, 33, 34 are positioned on the opposite, right side of the housing 1. The direction of the arrangement of the actuator 16 with respect to the fluid connection ports 31, 32, 33, 34 may also define the axial direction of the housing 1.

The housing 1 may comprise tapped blind holes for connecting conduits to the fluid connection ports 31, 32, 33, 34. The fluid connection ports 31, 32, 33, 34 may be inside the housing 1 and are only indicated by the arrows and the corresponding reference numbers. The blind holes and the conduits are not visible in figure 2. The conduits may be connected to the housing 1 via connectors 35, which may be screwed into the blind holes. Each connector 35 may be attached to the housing 1 by one screw. The connectors 35 may comprise a cylindrical portion for connecting a conduit and one hole for inserting a screw and screwing the connector 35 to the housing 1. The connectors 35 may be at least partially inserted into the fluid connection ports 31, 32, 33, 34.

Figure 3 is a section view of the four-way valve. Inside the housing 1, the rotatable valve element 15 is shown with two different pressure fluids streaming therethrough, indicated by arrows. The rotatable valve element 15 may be rotated by the actuator 16 for changing the direction of the fluid flow. The rotatable valve element 15 may be injection moulded and/or made of steel, aluminium, an aluminium alloy or a ceramic material. The axis of rotation of the rotatable valve element 15 may be parallel to the axis of axial conduits 100, 101 inside the housing 1.

The connectors 35 are screwed into tapped blind holes of the housing 1. The connectors 35 are provided for holding conduits. The valve may comprise any number of connectors 35. In the presently described embodiment, four connectors 35 are shown. However, reference numbers are not given for all connectors 35 for clarity's sake.

The axial conduits 100, 101 are shown extending in an axial direction of the housing. The axial conduits 100, 101 are fluidly connected to the rotatable valve element 15 via connection conduits 102, 103. Axial conduits 100, 101 may be oriented perpendicular to the connection conduits 102, 103.

The rotatable valve element 15 may be provided between the connection conduits 102, 103. The filling valves 19, 20 may be aligned coaxially with the connection conduits 102, 103. Thus, the connection conduits 102, 103 may be drilled at the same manufacturing step as openings for the filling valves 19, 20. The connection conduits 102, 103 may be offset with respect to each other in the axial direction of the housing 1.

The rotatable valve element 15 may comprise at least three sealing portions 151, which seal the rotatable valve element 15 against the housing 1. One of the sealing portions 151 may be arranged between the two connection conduits 102, 103 in the axial direction of the housing 1. The other two sealing portions 151 may be arranged on outlying positions with respect to the connection conduits 102, 103 and in the axial direction of the housing 1.

The presently described four-way valve may be part of a heat-pump arrangement comprising a compressor and further components not shown in the figures. The four-way valve and the compressor may be connected such that a fluid conduit portion 22 closest to the actuator 16 is fluidly connected to the suction port of the compressor. This connection ensures that low temperature fluid is present close to the actuator 16, thereby reducing the risk of high temperature related damage to the actuator. The fluid conduit portion 22 may be situated between the two connection conduits 102, 103 on the one side and the actuator 16 on the other side. The fluid conduit portion 22 may comprise an internal part of the rotatable valve element 15.

The rotatable valve element 15 may be connected mechanically to the actuator 16 via a gear arrangement. Some or all of the external or partially external components or portions of the valve, such as the actuator 16, the fluid connection ports 31, 32, 33, 34, the connectors 35, the sensor components 17, 18, the filling valves 19, 20 and/or a pressure switch 24 may be arranged planar with respect to each other. The mentioned components or portions may be all or partially oriented away from the housing 1, in particular in a perpendicular direction with respect to the housing 1 or the portion of the housing 1, to which the components are attached.

The housing 1 may also comprise an opening for attaching the pressure switch 24. The pressure switch 24 may be arranged in parallel to at least one of the filling valves 19, 20. The pressure switch 24 may be arranged between one of the sensor components 17, 18 and one of the filling valves 19, 20.

The housing 1 may comprise three major feedthroughs extending along the entire length of the housing 1 in an axial direction thereof. The two connection conduits 102, 103 may be arranged at an angle to the feedthroughs, in particular at a perpendicular angle. The major feedthroughs may be extruded together with the remainder of the housing 1, while the two connection conduits 102, 103 may be formed, in particular drilled, during another manufacturing step of the housing 1.

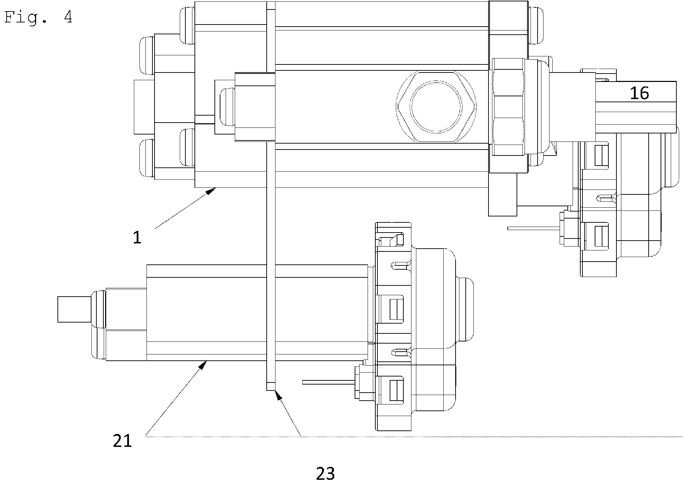

Figure 4 is a side view of the four-way valve with an expansion component 21. The expansion component 21 is used for expanding the compressed fluid flowing through the valve. Corresponding fluid connections have to be established between the housing 1 and the expansion component 21 but are not shown in figure 4. The expansion component 21 may be mounted to the housing 1 via a mounting bracket 23. The expansion component 21 may be oriented in the same way as the housing 1, such that the fluid connection ports of the housing 1 and the expansion component 21 point in one direction, i.e. left in figure 4, and at least some other connections such as electric connections of i.e. the actuator 16 point in the opposite direction.

In an embodiment not shown in the figures, the four-way valve may comprise the actuator 16, the sensor components 17, 18 and/or further electronic components such that they are provided as one sub-component, in particular with a common sub-housing and/or with a flexible printed circuit board for connecting said electronic components.

This combined sub-component further facilitates the assembly and repair of the valve, as electronic components may simply be completely or nearly completely assembled or replaced by assembling or replacing the corresponding sub-component.

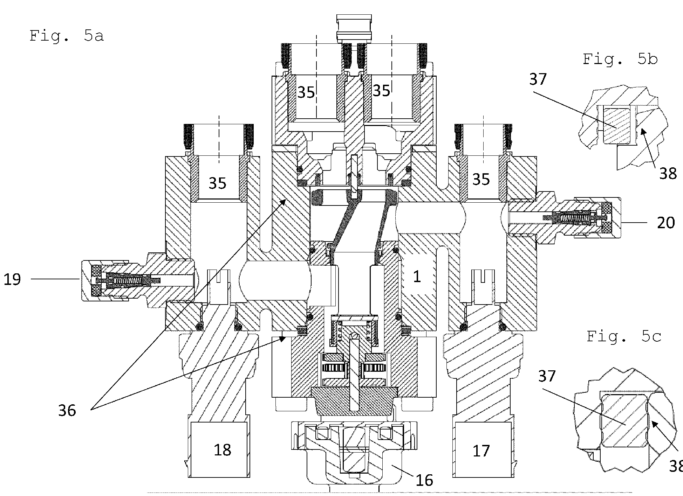

Figures 5a to 5c show different views of the seals of the four-way valve. Several redundant seals 36 may be provided at various positions of the valve. In particular, the redundant seals 36 may be provided between the housing 1 and other components of the valve. For example, a redundant seal 36 may be provided between the housing 1 and one or more of the connectors 35.

Although only some of the redundant seals 36 are indicated, said redundant seals 36 may be used at any suitable position within the valve.

A redundant seal 36 may comprise two or more separate seal components, such as a rubber seal, a metal seal and/or a glued portion between two components.

The redundant seal 36 may be provided between, on the one side, the housing 1 and, on the other side, the actuator 16, the sensor components 17, 18 and/or the filling valves 19, 20. The seal may be a metal seal and/or it may comprise glue or other synthetic materials.

Figures 5b and 5c show a metal seal, i.e. metal seal components comprising a knife edge portion. In figure 5a, a ring-shaped metal seal component, such as an annealed aluminium ring 37 is shown prior to the connection of two components of the valve. The two components of the valve are shown to comprise knife edge features 38, which are inserted into the aluminium ring 37 upon connection of the two components.

Figure 5c shows the situation, in which the two components of the valve are connected and the knife edge features 38 are inserted into the aluminium ring 37. The insertion of the knife edge features 38 into the aluminium ring 37 ensures a sealing and gastight connection between the two components of the valve.

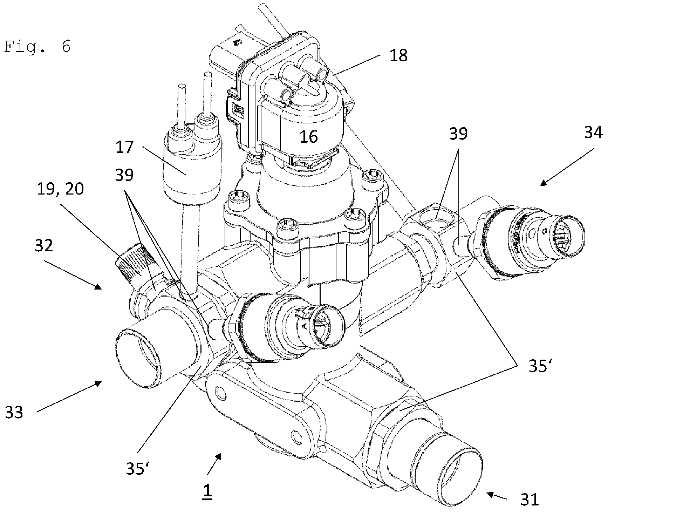

Figure 6 is a perspective view of another embodiment of the four-way valve. Here, at least one fluid connector 35' is provided forming a fluid connection between at least one of the fluid connection ports 31, 32, 33, 34 and the heat-pump arrangement The heat-pump arrangement is not shown in the figure. In the embodiment of figure 6, four fluid connector 35' are shown oriented in different directions of the housing 1. The four fluid connectors 35' are positioned opposite the actuator 16. In other words, the four fluid connectors 35' are provided at one end of the valve and the actuator 16 is provided at the other end and along an axial direction of the valve. The axial direction of the valve embodiment of figure 6 may be parallel to the rotational axis of the actuator 16. The fluid connection ports 31, 32, 33, 34 may provide a fluid connection between the inside of the housing 1 and the outside of the valve.

Prior to the fixing of the fluid connectors 35', the fluid connectors 35' can be rotated with respect to the remainder of the housing 1, such that they can be oriented in a desired direction. At least one of the fluid connectors 35' comprises at least one connector port 39 for connecting the fluid connector 35' to at least one of the sensor components 17, 18 or to other devices.

The connector ports 39 may fluidly connect the inside of the fluid connector 35' and therefore the inside of the housing 1 to components outside of the fluid connector 35'. The fluid connector 35' may be fluidly connected to a filling valve 19, 20, in particular a Schrader valve, via its connector port 39. Alternatively or additionally, the fluid connector 35' may be fluidly connected to a fluid conduit via its connector port 39. The fluid conduit may provide fluid to or receive fluid from the fluid connector 35'.

Alternatively or additionally, the connector port 39 may provide access to the inside of the fluid connector 35' such that sensors or other devices may interact with the fluid inside the fluid connector 35'.

In the embodiment of figure 6, four fluid connectors 35' are provided forming a fluid connection between each of the fluid connection ports 31, 32, 33, 34 and a heat-pump arrangement not shown in the figure. The fluid connectors 35' may comprise any suitable number of connector ports 39 and preferably between two and six connector ports 39.

The connector ports 39 may be arranged such that the components connected to the connector ports, e.g. the filling valves 19, 20, sensor components 17, 18 and/or other components may be oriented in various directions for facilitating the integration of the four-way valve in its chosen surroundings.

The two first fluid connection ports 31, 32 are shown close to the bottom of the valve. They are oriented at an angle of 90° to two second fluid connection ports 33, 34. The angled orientation of the first and second fluid connection ports 31, 32, 33, 34 ensures that their respective fluid connectors 35' can be oriented in an easily accessible way. The two second fluid connection ports 33, 34 are positioned between the actuator and the two first fluid connection ports 31, 32.

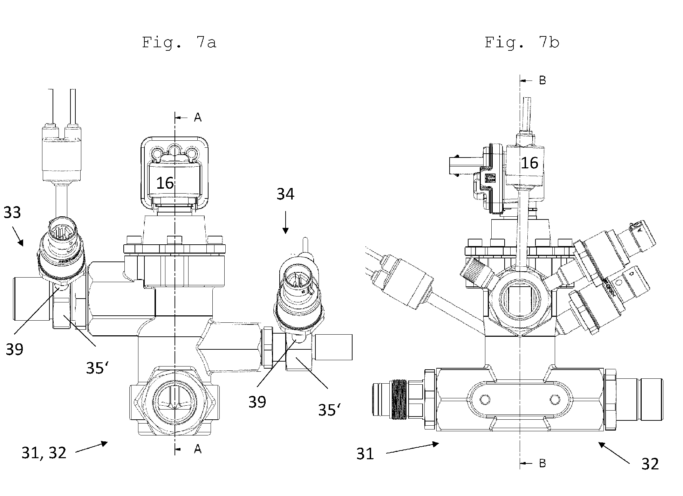

Figures 7a and 7b show side views of the other embodiment of the four-way valve. The two first fluid connection ports 31, 32 are shown to be aligned coaxially to each other. The two second fluid connection ports 33, 34 are aligned in parallel but not coaxially to each other. The connector ports 39 of the fluid connectors 35' of the second fluid connection ports 33, 34 are oriented away from the first fluid connection ports 31, 32 and/or towards the actuator 16. Additionally or alternatively, connector ports 39 may be oriented towards and/or in parallel to the first fluid connection ports 31, 32 and/or towards the actuator 16.

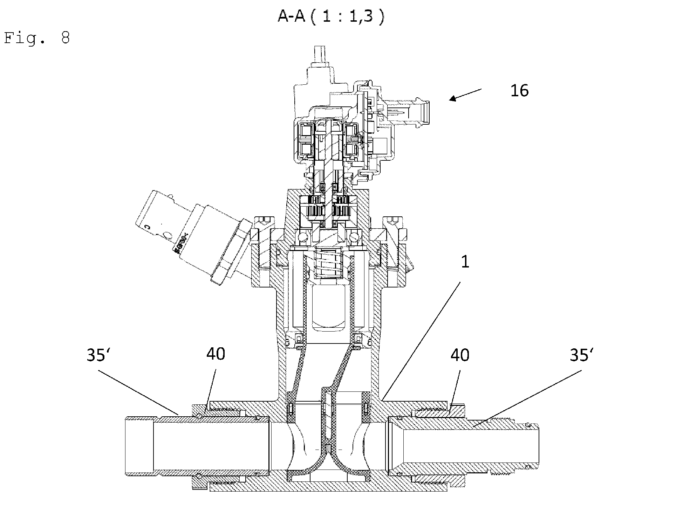

Figure 8 is a section view of the other embodiment of the four-way valve. The fluid connector 35' is connected to the remainder of the housing 1 via a union nut 40. The union nut 40 is screwed to the remainder of the housing 1 at any desired relative angle of the fluid connector 35' to the housing 1. This means that the fluid connector 35' can be rotated relative to the housing 1 when the union nut 40 is not fully engaging the housing 1. Once the union nut 40 is screwed to the housing 1, the relative position of the fluid connector 35' and the housing 1 is fixed. The axial direction of the valve embodiment of figure 8 may be parallel to the rotational axis of the actuator 16, i.e. the vertical direction in figure 8.

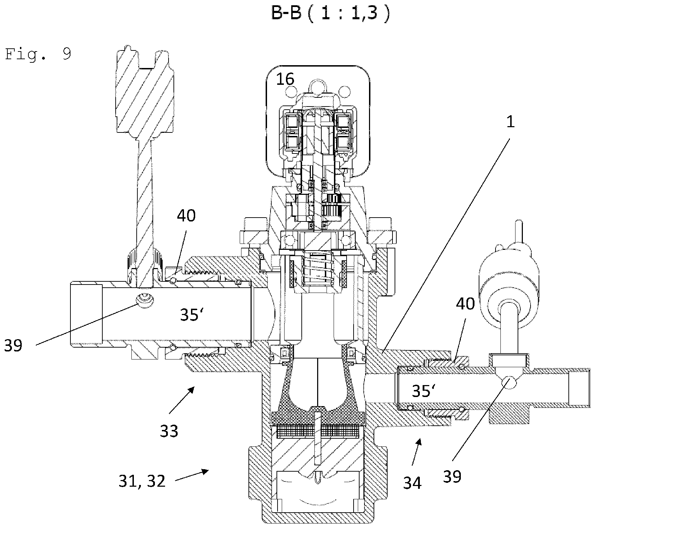

Figure 9 is another section view of the other embodiment of the four-way valve. The two second fluid connection ports 33, 34 are shown between the actuator 16 and the two first fluid connection ports 31, 32. The connector ports 39 are visible from the inside of the corresponding fluid connectors 35'. The fluid connectors 35' are connected to the remainder of the housing 1 via union nuts 40.

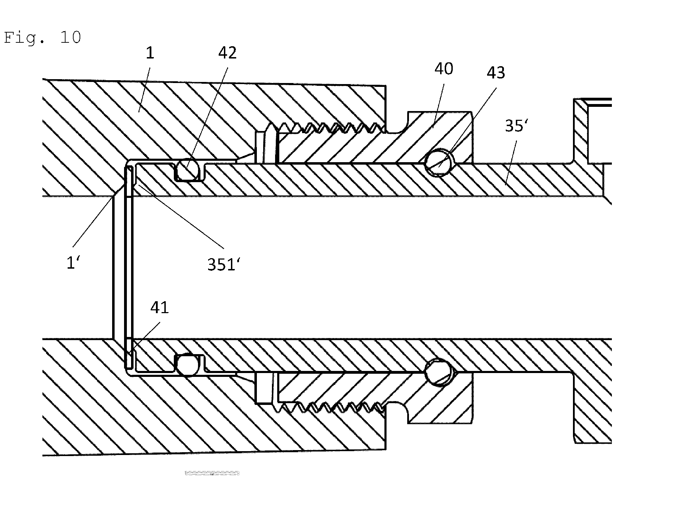

Figure 10 is a detailed section view of the other embodiment of the four-way valve. The figure shows the connection between the housing 1 and the fluid connector 35'. A deformable gasket 41 is provided between the fluid connector 35' and the remainder of the housing 1. The gasket 41 may be a metal component. The gasket 41 may be held in place by the fluid connector 35' on one side and the housing 1 on an opposite side of the gasket 41. The gasket 41 is deformed by an end-portion 351' of the fluid connector 35' pressing against a contact portion 1' of the remainder of the housing 1.

A toroidal structure 43 may be provided between the union nut 40 and the fluid connector 35' for transferring a force between the union nut 40 and the fluid connector 35'. The force may result from the screwing of the union nut 40 to the remainder of the housing 1.

The end-portion 351' of the fluid connector 35' and the contact portion 1' of the housing 1 comprise a protruding portion and a recessed portion, preferably a chamfered portion. The end-portion 351' and the contact portion 1' may be shaped to deform the gasket 41 in a desired way during the screwing of the union nut 40 to the housing 1. The end-portion 351' and the contact portion 1' may be provided at either of the housing 1 and the fluid connector 35'.

A seal 42 may be provided between the union nut 40 and the gasket 41, such that no atmospheric humidity surrounding the valve may enter between the fluid connector 35' and the housing to contact the gasket 41. The gasket 41 may thus be protected from adverse humid conditions.

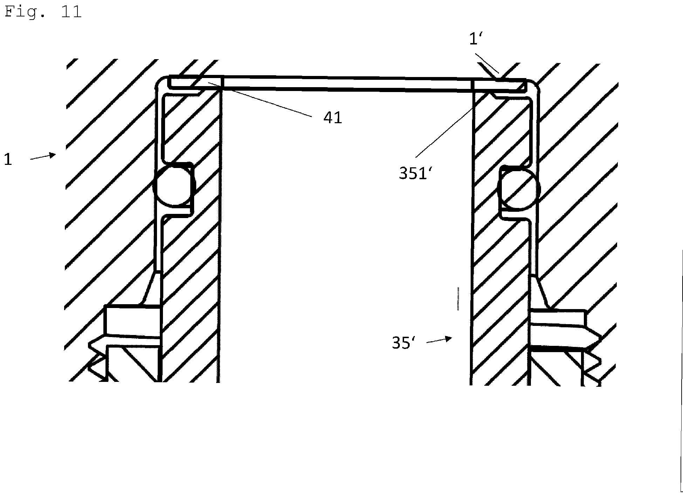

Figure 11 is a detailed section view of the gasket 41 in a first state, in which the gasket 41 is substantially flat. The gasket 41 is inserted between the fluid connector 35' and the housing 1.The protruding end-portion 351' of the fluid connector 35' touches the gasket 41 and pushes it towards the contact portion 1' of the remainder of the housing 1. However, the gasket 41 has not yet been deformed to provide a sealing connection between the fluid connector 35' and the housing 1. The contact portion 1' may comprise a recessed portion, into which the end-portion 351' may push the gasket 41. The end-portion 351' and the contact portion 1' may comprise any suitable matching geometrical features for pressing and deforming the gasket 41.

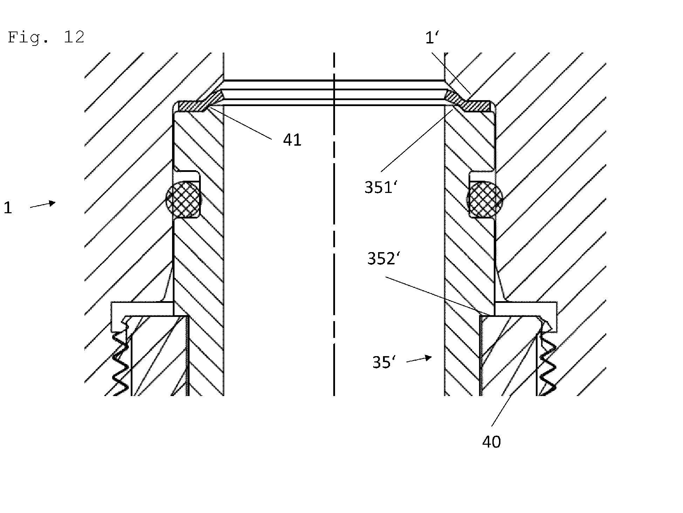

Figure 12 is a detailed section view of the gasket 41 in a second state, in which the gasket 41 has been deformed by the fluid connector 35' and the housing 1 pressing against it. In order to press the fluid connector 35' against the gasket 41, the union nut 40 is screwed into the housing 1.

The union nut 40 may contact the fluid connector 35' via some contact feature 352', such that a force may be applied from the union nut 40, via the fluid connector 35' and to the gasket 41.

The gasket 41 may thus be bent from its flat, non-deformed state shown in figure 11 to the deformed state shown in figure 12, creating a durable sealing between the fluid connector 35' and the housing 1.

The features of the various described embodiments may be combined in any logically possible and suitable way within the scope of the invention, that is defined by solely by claim 1

## Claims

1. Four-way valve for a heat-pump arrangement, comprising a housing (1) with four fluid connection ports (31, 32, 33, 34), a rotatable valve element (15) for switching the connections between the fluid connection ports (31, 32, 33, 34) and an actuator (16) for rotating the valve element (15), **characterized in that** the four-way valve further comprises sensor components (17, 18) on a low pressure side and a high pressure side of the four-way valve configured to measure properties of a fluid inside the housing (1).

2. Four-way valve according to claim 1, **characterized in that** the housing (1) is formed integrally and/or extruded and/or pressure die cast and/or made of aluminium or an aluminium alloy and/or that the housing (1) is provided with filling valves (19, 20), in particular Schrader valves.

3. Four-way valve according to any of the previous claims, **characterized in that** the housing (1) comprises three partially separated portions (11, 12, 13), wherein a central portion (12) comprises two central fluid connection ports (32, 33) and two lateral portions (11, 13) comprise one lateral fluid connection port (31, 34) each.

4. Four-way valve according to claim 3, **characterized in that** the lateral fluid connection ports (31, 34) are arranged opposite the sensor components (17, 18).

5. Four-way valve according to at least claim 3, **characterized in that** the partially separated portions (11, 12, 13) are separated by grooves (14), in particular milled or stamped grooves (14).

6. Four-way valve according to any of the previous claims, **characterized in that** the fluid connection ports (31, 32, 33, 34) are arranged at a side of the housing (1) opposite the actuator (16).

7. Four-way valve according to any of the previous claims, **characterized in that** the sensor components (17, 18) are P&T transmitters and/or that filling valves (19, 20) are Schrader valves and/or that the rotatable valve element (15) is injection moulded and/or made of steel, aluminium, an aluminium alloy or a ceramic material and/or that the four-way valve further comprises an expansion component (21) and/or a pressure switch.

8. Four-way valve according to at least claim 2, **characterized in that** at least one redundant seal (36) is provided between the housing (1) and at least one of a connector (35), the actuator (16), the sensor components (17, 18) and/or filling valves (19, 20).

9. Four-way valve according to any of the previous claims, **characterized in that** the housing (1) comprises tapped blind holes for connecting conduits to the fluid connection ports (31, 32, 33, 34).

10. Four-way valve according to any of the previous claims, **characterized in that** at least one fluid connector (35') is provided forming a fluid connection between at least one of the fluid connection ports (31, 32, 33, 34) and the heat-pump arrangement, wherein the fluid connector (35') is rotatable with respect to the remainder of the housing (1) and wherein the fluid connector (35') comprises at least one connector port (39) for fluidly connecting the fluid connector (35') to at least one of the sensor components (17, 18).

11. Four-way valve according to claim 10, **characterized in that** four fluid connectors (35') are provided forming a fluid connection between each of the fluid connection ports (31, 32, 33, 34) and the heat-pump arrangement, wherein at least one of the fluid connectors (35') comprises the connector port (39) for fluidly connecting the fluid connector (35') to at least one of the sensor components (17, 18).

12. Four-way valve according to claim 10 or 11, **characterized in that** the fluid connector (35') comprises between two and six connector ports (39).

13. Four-way valve according to any of claims 10 to 12, **characterized in that** the fluid connector (35') is connected to the remainder of the housing (1) via a union nut (40), wherein preferably the union nut (40) is screwed to the remainder of the housing (1).

14. Four-way valve according to any of claims 10 to 13, **characterized in that** a deformed gasket (41) is provided between the fluid connector (35') and the remainder of the housing (1), wherein preferably the gasket (41) is a metal component and/or the gasket (41) is deformed by an end-portion (351') of the fluid connector (35') pressing against a contact portion (1') of the remainder of the housing (1).

15. Four-way valve according to claim 14, **characterized in that** the end-portion (351') of the fluid connector (35') and the contact portion (1') of the remainder of the housing (1) comprise a protruding portion and a recessed portion, preferably a chamfered portion.

## Patentansprüche

1. Vier-Wege-Ventil für eine Wärmepumpenanordnung, umfassend ein Gehäuse (1) mit vier Fluidverbindungsanschlüssen (31, 32, 33, 34), ein drehbares Ventilelement (15) zum Umschalten der Verbindungen zwischen den Fluidverbindungsanschlüssen (31, 32, 33, 34) und einen Aktor (16) zum Drehen des Ventilelements (15), **dadurch gekennzeichnet, dass** das Vier-Wege-Ventil ferner Sensorkomponenten (17, 18) an einer Niederdruckseite und einer Hochdruckseite des Vier-Wege-Ventils umfasst, die dazu konfiguriert sind, Eigenschaften eines Fluids im Inneren des Gehäuses (1) zu messen.

2. Vier-Wege-Ventil nach Anspruch 1, **dadurch gekennzeichnet, dass** das Gehäuse (1) integral gebildet und/oder extrudiert und/oder druckgegossen ist und/oder aus Aluminium oder einer Aluminiumlegierung besteht und/oder dass das Gehäuse (1) mit Füllventilen (19, 20) versehen ist, insbesondere Schraderventilen.

3. Vier-Wege-Ventil nach einem der vorhergehenden Ansprüche, **dadurch gekennzeichnet, dass** das Gehäuse (1) drei teilweise getrennte Abschnitte (11, 12, 13) umfasst, wobei ein mittlerer Abschnitt (12) zwei mittlere Fluidverbindungsanschlüsse (32, 33) umfasst und zwei seitliche Abschnitte (11, 13) jeweils einen seitlichen Fluidverbindungsanschluss (31, 34) umfassen.

4. Vier-Wege-Ventil nach Anspruch 3, **dadurch gekennzeichnet, dass** die seitlichen Fluidverbindungsanschlüsse (31, 34) gegenüber den Sensorkomponenten (17, 18) angeordnet sind.

5. Vier-Wege-Ventil nach Anspruch 3, **dadurch gekennzeichnet, dass** die teilweise getrennten Abschnitte (11, 12, 13) durch Rillen (14) getrennt sind, insbesondere durch gewalzte oder gestanzte Rillen (14).

6. Vier-Wege-Ventil nach einem der vorhergehenden Ansprüche, **dadurch gekennzeichnet, dass** die Fluidverbindungsanschlüsse (31, 32, 33, 34) an einer Seite des Gehäuses (1) gegenüber dem Aktor (16) angeordnet sind.

7. Vier-Wege-Ventil nach einem der vorhergehenden Ansprüche, **dadurch gekennzeichnet, dass** die Sensorkomponenten (17, 18) P&T-Transmitter sind und/oder dass Füllventile (19, 20) Schraderventile sind und/oder dass das drehbare Ventilelement (15) spritzgegossen und/oder aus Stahl, Aluminium, einer Aluminiumlegierung oder einem keramischen Material besteht und/oder dass das Vier-Wege-Ventil ferner eine Expansionskomponente (21) und/oder einen Druckschalter umfasst.

8. Vier-Wege-Ventil nach Anspruch 2, **dadurch gekennzeichnet, dass** mindestens eine redundante Dichtung (36) zwischen dem Gehäuse (1) und mindestens einem von einem Verbindungsstück (35), dem Aktor (16), den Sensorkomponenten (17, 18) und/oder Füllventilen (19, 20) bereitgestellt ist.

9. Vier-Wege-Ventil nach einem der vorhergehenden Ansprüche, **dadurch gekennzeichnet, dass** das Gehäuse (1) mit Innengewinde versehene Blindöffnungen zum Verbinden von Leitungen mit den Fluidverbindungsanschlüssen (31, 32, 33, 34) umfasst.

10. Vier-Wege-Ventil nach einem der vorhergehenden Ansprüche, **dadurch gekennzeichnet, dass** mindestens ein Fluidverbindungsstück (35') bereitgestellt ist, das eine Fluidverbindung zwischen mindestens einem der Fluidverbindungsanschlüsse (31, 32, 33, 34) und der Wärmepumpenanordnung bildet, wobei das Fluidverbindungsstück (35') in Bezug auf den Rest des Gehäuses (1) drehbar ist und wobei das Fluidverbindungsstück (35') mindestens einen Verbindungsstückanschluss (39) für die Fluidverbindung des Fluidverbindungsstücks (35') mit mindestens einer der Sensorkomponenten (17, 18) umfasst.

11. Vier-Wege-Ventil nach Anspruch 10, **dadurch gekennzeichnet, dass** vier Fluidverbindungsstücke (35') bereitgestellt sind, die eine Fluidverbindung zwischen jedem der Fluidverbindungsanschlüsse (31, 32, 33, 34) und der Wärmepumpenanordnung bilden, wobei mindestens eines der Fluidverbindungsstücke (35') den Verbindungsstückanschluss (39) für die Fluidverbindung des Fluidverbindungsstücks (35') mit mindestens einer der Sensorkomponenten (17, 18) umfasst.

12. Vier-Wege-Ventil nach Anspruch 10 oder 11, **dadurch gekennzeichnet, dass** das Fluidverbindungsstück (35') zwischen zwei und sechs Verbindungsstückanschlüsse (39) umfasst.

13. Vier-Wege-Ventil nach einem der Ansprüche 10 bis 12, **dadurch gekennzeichnet, dass** das Fluidverbindungsstück (35') über eine Überwurfmutter (40) mit dem Rest des Gehäuses (1) verbunden ist, wobei die Überwurfmutter (40) vorzugsweise an den Rest des Gehäuses (1) geschraubt ist.

14. Vier-Wege-Ventil nach einem der Ansprüche 10 bis 13, **dadurch gekennzeichnet, dass** eine verformte Dichtung (41) zwischen dem Fluidverbindungsstück (35') und dem Rest des Gehäuses (1) bereitgestellt ist, wobei die Dichtung (41) vorzugsweise eine Metallkomponente ist und/oder die Dichtung (41) durch einen Endabschnitt (351') des Fluidverbindungsstücks (35') verformt wird, das gegen einen Kontaktabschnitt (1') des Rests des Gehäuses (1) drückt.

15. Vier-Wege-Ventil nach Anspruch 14, **dadurch gekennzeichnet, dass** der Endabschnitt (351') des Fluidverbindungsstücks (35') und der Kontaktabschnitt (1') des Rests des Gehäuses (1) einen hervorstehenden Abschnitt und einen vertieften Abschnitt, vorzugsweise einen abgeschrägten Abschnitt umfassen.

## Revendications

1. Soupape à quatre voies pour un agencement de pompe à chaleur, comprenant un logement (1) avec quatre ports de raccordement fluidique (31, 32, 33, 34), un élément de soupape rotatif (15) pour commuter les raccordements entre les ports de raccordement fluidique (31, 32, 33, 34) et un actionneur (16) pour mettre en rotation l'élément de soupape (15), **caractérisée en ce que** la soupape à quatre voies comprend en outre des composants capteurs (17, 18) sur un côté basse pression et un côté haute pression de la soupape à quatre voies, configurés pour mesurer des propriétés d'un fluide à l'intérieur du logement (1).

2. Soupape à quatre voies selon la revendication 1, **caractérisée en ce que** le logement (1) est formé de façon monobloc et/ou extrudé et/ou moulé en matrice sous pression et/ou fait d'aluminium ou d'un alliage d'aluminium et/ou que le logement (1) est pourvu de soupapes de remplissage (19, 20), en particulier de soupapes Schrader.

3. Soupape à quatre voies selon de quelconques des revendications précédentes, **caractérisée en ce que** le logement (1) comprend trois portions partiellement séparées (11, 12, 13), dans laquelle une portion centrale (12) comprend deux ports de raccordement fluidique centraux (32, 33) et deux portions latérales (11, 13) comprennent un port de raccordement fluidique latéral (31, 34) chacune.

4. Soupape à quatre voies selon la revendication 3, **caractérisée en ce que** les ports de raccordement fluidique latéraux (31, 34) sont agencés de façon opposée aux composants capteurs (17, 18).

5. Soupape à quatre voies selon au moins la revendication 3, **caractérisée en ce que** les portions partiellement séparées (11, 12, 13) sont séparées par des rainures (14), en particulier des rainures fraisées ou estampées (14).

6. Soupape à quatre voies selon de quelconques des revendications précédentes, **caractérisée en ce que** les ports de raccordement fluidique (31, 32, 33, 34) sont agencés sur un côté du logement (1) opposé à l'actionneur (16).

7. Soupape à quatre voies selon de quelconques des revendications précédentes, **caractérisée en ce que** les composants capteurs (17, 18) sont des transmetteurs P&T, et/ou que des soupapes de remplissage (19, 20) sont des soupapes Schrader, et/ou que l'élément de soupape rotatif (15) est moulé par injection et/ou fait d'acier, d'aluminium, d'un alliage d'aluminium ou d'un matériau céramique, et/ou que la soupape à quatre voies comprend en outre un composant de dilatation (21) et/ou un commutateur de pression.

8. Soupape à quatre voies selon au moins la revendication 2, **caractérisée en ce qu'**au moins un joint redondant (36) est prévu entre le logement (1) et au moins un élément parmi un raccord (35), l'actionneur (16), les composants capteurs (17, 18), et/ou les soupapes de remplissage (19, 20).

9. Soupape à quatre voies selon de quelconques des revendications précédentes, **caractérisée en ce que** le logement (1) comprend des trous borgnes taraudés pour raccorder des conduits aux ports de raccordement fluidique (31, 32, 33, 34).

10. Soupape à quatre voies selon de quelconques des revendications précédentes, **caractérisée en ce qu'**au moins un raccord fluidique (35') est prévu, formant un raccordement fluidique entre au moins un des ports de raccordement fluidique (31, 32, 33, 34) et l'agencement de pompe à chaleur, dans laquelle le raccord fluidique (35') est rotatif par rapport au reste du logement (1) et dans laquelle le raccord fluidique (35') comprend au moins un port-raccord (39) pour raccorder fluidiquement le raccord fluidique (35') à au moins un des composants capteurs (17, 18).

11. Soupape à quatre voies selon la revendication 10, **caractérisée en ce que** quatre raccords fluidiques (35') sont prévus, formant un raccordement fluidique entre chacun des ports de raccordement fluidique (31, 32, 33, 34) et l'agencement de pompe à chaleur, dans laquelle au moins un des raccords fluidiques (35') comprend le port-raccord (39) pour raccorder fluidiquement le raccord fluidique (35') à au moins un des composants capteurs (17, 18).

12. Soupape à quatre voies selon la revendication 10 ou 11, **caractérisée en ce que** le raccord fluidique (35') comprend entre deux et six ports-raccords (39).

13. Soupape à quatre voies selon de quelconques des revendications 10 à 12, **caractérisée en ce que** le raccord fluidique (35') est raccordé au reste du logement (1) par l'intermédiaire d'un écrou-union (40), dans laquelle, de préférence, l'écrou-union (40) est vissé sur le reste du logement (1).

14. Soupape à quatre voies selon de quelconques des revendications 10 à 13, **caractérisée en ce qu'**un joint d'étanchéité déformé (41) est prévu entre le raccord fluidique (35') et le reste du logement (1), dans laquelle, de préférence, le joint d'étanchéité (41) est un composant métallique et/ou le joint d'étanchéité (41) est déformé par une portion d'extrémité (351') du raccord fluidique (35') pressant contre une portion de contact (1') du reste du logement (1).

15. Soupape à quatre voies selon la revendication 14, **caractérisée en ce que** la portion d'extrémité (351') du raccord fluidique (35') et la portion de contact (1') du reste du logement (1) comprennent une portion en saillie et une portion en retrait, de préférence une portion chanfreinée.
